# EUROPÄISCHE PATENTANMELDUNG

(11) **EP 1 343 268 A1**
(43) Veröffentlichungstag der Anmeldung: **10.09.2003**
(21) Anmeldenummer: 02001337.1
(22) Anmeldetag: 18.01.2002
(51) Int. Cl.: H04L 5/02, H04Q 7/38

(54) **Dynamische Zuordnung von Funkressourcen in einem Funk-Kommunikationssystem**

(71) Anmelder: SIEMENS AKTIENGESELLSCHAFT, 80333 München (DE)
(72) Erfinder: Costa, Elena, Dr., 85748 Garching (DE); Haas, Harald, Dr., 83607 Holzkirchen (DE); Schulz, Egon, Dr., 80993 München (DE)

(57) **Zusammenfassung**

Die Erfindung betrifft ein Verfahren zur dynamischen Zuordnung von Funkressourcen an mindestens zwei einer Basisstation zugeordneten Teilnehmerstationen in einem FunkKommunikationssystem, wobei durch ein erstes Vielfachzugriffsverfahren die Funkressourcen in mindestens einer Funkressource aus Leistung, Zeit, Raum oder insbesondere Frequenz in mindestens zwei Unterbänder (SB1, SB2) separiert werden und durch ein zweites Vielfachzugriffsverfahren in jedem Unterband (SB1, SB2) eine Teilnehmerseparierung in mindestens zwei Funkressourcen aus Leistung, Frequenz, Zeit oder Raum erfolgt, wobei die mindestens zwei Teilnehmerstationen anhand der zwei Vielfachzugriffsverfahren den mindestens zwei Unterbändern (SB1, SB2) für Funkübertragungen zugeordnet werden. Erfindungsgemäß tauschen zwei der mindestens zwei Teilnehmerstationen, die anderen Unterbändern zugewiesen sind, eine erste Funkressource (C1, C2, C3, C4) der mindestens zwei Funkressourcen des zweiten Vielfachzugriffsverfahrens und/oder wechselt mindestens eine der mindestens zwei Teilnehmerstationen auf ein nicht mit einer Teilnehmerstation belegtes anderes Unterband im Hinblick auf die erste Funkressource (C1, C2, C3, C4), wird für jede neu erzeugte Zuordnung von Funkressourcen eine Funkkapazität des Funk-Kommunikationssystems berechnet und wird diejenige neue Zuordnung der Funkressource mit der höchsten Funkkapazität ausgewählt.

## Beschreibung

Die Erfindung betrifft ein Verfahren zur dynamischen Zuordnung von Funkressourcen an mindestens zwei einer Basisstation zugeordneten Teilnehmerstationen in einem Funk-Kommunikationssystem nach dem Oberbegriff des Anspruchs 1.

In Funk-Kommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten jedoch mit eingeschränkter Geschwindigkeit, wie zum Beispiel beim Filetransfer zwischen Computern.

Für zukünftige Mobilfunksysteme mit CDMA- oder TD/CDMA-Übertragungsverfahren, wie beispielsweise UMTS (Universal Mobile Telecommunication System) oder andere Systeme der 3. oder 4. Generation, sind Frequenzen im Frequenzband von ca. 2000 MHz vorgesehen. Diese Systeme der 3. oder 4. Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funk-Kommunikationssystemen die Schnittstelle mit den geringsten Ressourcen ist. Bei diesen Funk-Kommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funk-Kommunikationssystemen durch Vielfachzugriffsverfahren (Multiple Access, MA) geregelt.

Bei Zeitbereichs-Vielfachzugriffsverfahren (TDMA) wird jedes Sende- und Empfangsfrequenzband in Zeitschlitze unterteilt, wobei ein oder mehrere zyklisch wiederholte Zeitschlitze den Stationen zugeteilt werden. Durch TDMA wird die Funkressource Zeit stationsspezifisch separiert.

Bei Frequenzbereichs-Vielfachzugriffsverfahren (FDMA) wird der gesamte Frequenzbereich in schmalbandige Bereiche unterteilt, wobei ein oder mehrere schmalbandige Frequenzbänder den Stationen zugeteilt werden. Durch FDMA wird die Funkressource Frequenz stationsspezifisch separiert.

Viele Funk-Kommunikationssysteme benutzen eine Kombination der TDMA und FDMA Verfahren, wobei jedes schmalbandige Frequenzband in Zeitschlitze unterteilt ist.

Bei Codebereichs-Vielfachzugriffsverfahren (CDMA) wird durch einen Spreizcode, der aus vielen einzelnen sogenannten Chips besteht, die zu übertragende Leistung/Information stationsspezifisch codiert, wodurch die zu übertragende Leistung codebedingt zufällig über einen großen Frequenzbereich gespreizt wird. Die von unterschiedlichen Stationen benutzen Spreizcodes innerhalb einer Zelle/Basisstation sind jeweils gegenseitig orthogonal oder im wesentlichen orthogonal, wodurch ein Empfänger die ihm zugedachte Signalleistung erkennt und andere Signale unterdrückt. Durch CDMA wird die Funkressource Leistung durch Spreizcodes stationsspezifisch separiert.

Bei orthogonalen Frequenz-Vielfachzugriffsverfahren (OFDM) werden die Daten breitbandig übermittelt, wobei das Frequenzband in äquidistante, orthogonale Unterträger eingeteilt wird, so dass die simultane Phasenverschiebung der Unterträger einen zwei-dimensionalen Datenfluß im Zeit-Frequenz Bereich aufspannt. Durch OFDM wird die Funkressource Frequenz mittels orthogonalen Unterträgern stationsspezifisch separiert. Die während einer Zeiteinheit auf den orthogonalen Unterträgern übermittelten zusammengefassten Datensymbole werden als OFDM Symbole bezeichnet.

Bei Vielträger-Codebereichs-Vielfachzugriffsverfahren (MC-CDMA; Multi Carrier-CDMA) handelt es sich um eine Kombination des CDMA und des OFDM Verfahrens, wobei die Spreizung im Frequenzraum angewandt wird. Auf jeden orthogonalen Unterträger des OFDM Verfahrens werden die Chips der Codes unterschiedlicher Stationen zeitlich parallel projeziert, wobei die Codelänge, d.h. die Anzahl der Chips, der Zahl der Unterträger entspricht. Durch MC-CDMA werden die Funkressourcen Frequenz und Leistung stationsspezifisch separiert.

Die Kombination von mehreren Vielfachzugriffsverfahren auf die Funkressourcen wird betrachtet, dabei insbesondere die Zuordnung von Funkressourcen an mindestens zwei einer Basisstation zugeordneten Teilnehmerstationen in einem Funk-Kommunikationssystem, wobei durch ein erstes Vielfachzugriffsverfahren die Funkressourcen in mindestens einer Funkressource aus Leistung, Zeit, Raum oder insbesondere Frequenz in mindestens zwei Unterbänder separiert werden und durch ein zweites Vielfachzugrifsverfahren in jedem Unterband eine Teilnehmerseparierung in mindestens zwei Funkressourcen aus Leistung, Frequenz, Zeit oder Raum erfolgt, wobei die mindestens zwei Teilnehmerstationen anhand der zwei Vielfachzugriffsverfahren den mindestens zwei Unterbändern für Funkübertragungen zugeordnet werden.

Durch diese Kombination von Vielfachzugriffsverfahren ist zum Beispiel möglich, MC-CDMA mit FDMA zu kombinieren. Dabei wird mittels FDMA, dem ersten Vielfachzugriffsverfahren, die Funkressource Frequenz in Unterbänder aufgeteilt. Im Weiteren erfolgt mit MC-CDMA, dem zweiten Vielfachzugriffsverfahren, eine Teilnehmerseparierung in den einzelnen Unterbändern, wobei mittels MC-CDMA die Funkressourcen Leistung und Frequenz zwischen Teilnehmerstationen aufgeteilt werden. Eine andere Möglichkeit ist beispielsweise die Kombination von FDMA mit TD/CDMA.

Bisher wird die Zuordnung der Funkressourcen vorab einmal festgelegt. Die im Laufe der Zeit veränderten Bedingungen der Funkverbindung, wie zum Beispiel unterschiedliche Datenraten der Teilnehmerstationen oder unterschiedliche Zusammensetzung der Teilnehmerstationen, werden bei der Zuordnung der Funkressourcen nicht weiter berücksichtigt, so dass sich die Zuordnung der Funkressourcen nicht den aktuellen Anforderungen des Funk-Kommunikationssystems anpasst. Dadurch wird die Interferenz innerhalb eines Kunk-Kommunikationssystems, insbesondere innerhalb einer Funkzelle, bei der Zuordnung der Funkressourcen nicht berücksichtigt. Dies führt dazu, dass die Kapazität der Funkressourcen nicht optimal ausgenutzt werden.

Der Erfindung liegt daher die Aufgabe zugrunde, ein Verfahren zum Zuordnen der Frequenzressourcen aufzuzeigen, welches die Kapazität der Funkressource bei zeitlicher Veränderung der Funk-Bedingungen verbessert. Insbesondere soll eine Möglichkeit einer besseren Ausnutzung der Funkressourcen aufgezeigt werden.

Diese Aufgabe wird hinsichtlich des Verfahrens durch ein Verfahren mit den Merkmalen nach Anspruch 1 gelöst.

Ausgestaltungen und Weiterbildungen der Erfindung sind Gegenstand der Unteransprüche.

### Erfindungsgemäß

- tauschen zwei der mindestens zwei Teilnehmerstationen, die anderen Unterbändern zugewiesen sind, eine erste Funkressource der mindestens zwei Funkressourcen des zweiten Vielfachzugriffsverfahrens und/oder wechselt mindestens eine der mindestens zwei Teilnehmerstationen auf ein nicht mit einer Teilnehmerstation belegtes anderes Unterband im Hinblick auf die erste Funkressource,
- wird für jede neu erzeugte Zuordnung von Funkressourcen eine Funkkapazität des Funk-Kommunikationssystems berechnet und
- wird diejenige neue Zuordnung der Funkressource mit der höchsten Funkkapazität ausgewählt.

Durch die Vertauschung bzw. den Wechsel der ersten Funkressource der mindestens zwei Funkressourcen des zweiten Vielfachzugriffsverfahrens und der nachfolgenden Bewertung bezüglich der Kapazität des Funk-Kommunikationssystems ist es möglich, mehrere Zuordnungen der Funkressourcen miteinander zu vergleichen und diejenige Zuordnung der ersten Funkressource des mindestens zweiten Vielfachzugriffsverfahrens auszuwählen, die die höchste Kapazität des Funksystems ermöglicht. Die Zuordnung ist nun nicht statisch einmal festgelegt, sondern es ist möglich die Funkressourcen an veränderte Bedingung im Funk-Kommunikationssystem und damit dynamisch anzupassen. Dadurch wird es möglich, auch die Interferenz zu berücksichtigen, die maßgeblich zur Reduzierung der Kapazität des Funk-Kommunikationssystems beiträgt. Die Kapazität des Funk-Kommunikationssystems wird hinsichtlich der Zuordnung der ersten Funkressource optimiert.

### In Weiterbildung der Erfindung

- tauschen nach der Zuordnung der Funkressource anhand der ersten Funkressource der mindestens zwei Funkressourcen des zweiten Vielfachzugriffsverfahrens in einem ersten Schritt zwei der mindestens zwei Teilnehmerstationen, die anderen Unterbändern zugewiesen sind, in einem zweiten Schritt eine zweite Funkressource der mindestens zwei Funkressourcen des zweiten Vielfachzugriffsverfahrens und/oder wechselt mindestens eine der mindestens zwei Teilnehmerstationen auf ein nicht mit einer Teilnehmerstation belegtes anderes Unterband im Hinblick auf die zweite Funkressource,
- wird für jede neu erzeugte Zuordnung von Funkressourcen eine Funkkapazität des Funk-Kommunikationssystems berechnet und
- wird diejenige neue Zuordnung der Funkressource mit der höchsten Funkkapazität ausgewählt.

Neben der ersten Funkressource des zweiten Funk-Kommunikationssystems wird durch diese Weiterbildung auch die zweite Funkressource des zweiten Vielfachzugriffsverfahrens bei der Verbesserung der Kapazität berücksichtigt. Durch diese Berücksichtigung dieses zusätzlichen Freiheitsgrades bezüglich der Kapaziztätsoptimierung ist eine weitere Verbesserung der Kapazität des Funk-Kommunikationssystems hinsichtlich der Zuordnung der zweiten Funkressource möglich. Dieses Verfahren kann analog auch auf mehr als zwei Funkressourcen angewandt werden.

In Weiterbildung der Erfindung werden der erste und zweite Schritt wiederholt, bis die Änderung der Funkkapazität unter einem Schwellwert liegt. Durch die Wiederholung der Zuordnungsverfahren bezüglich der ersten und zweiten Funkressource des zweiten Vielfachzugriffsverfahrens ist es möglich, die Funkkapazität weiter zu verbessern, indem wechselseitige Abhängigkeiten zwischen der ersten und zweiten Funkressource, die die Funkkapazität negativ beeinflussen, iterativ, d.h. Schritt für Schritt, beseitigt werden können.

In Ausgestaltung der Erfindung erfolgt die erste Zuordnung der Funkressourcen zufällig oder ist vorgegeben. In Funk-Kommunikationssystemen mit kontinuierlich wechselnden Funk-Bedingungen, wie zum Beispiel mobilen Funk-Kommunikationssystemen, kann die erste Zuordnung der Funkressourcen zufällig erfolgen. Handelt es sich jedoch um ein Funk-Kommunikationssystem, bei dem die Funk-Bedingungen größtenteils stationär sind, wie zum Beispiel wireless LAN Systeme, so kann bei der Zuordnung der Funkressourcen von einer fest vorgegeben Zuordnung ausgegangen werden, die die statischen räumlichen Bedingungen berücksichtigt. Dies veringert die iterative Wiederholung der Verfahrenschritte 1 und 2 signifikant und damit den Aufwand für die Bestimmung einer verbesserten Zuordnung der Funkressourcen.

In Weiterbildung der Erfindung wird der erste und zweite Schritt nach vorbestimmten äquidistanten Zeitintervallen wiederholt. Durch diese Zeitintervalle ist das Systemverhalten bezüglich der Funkressourcen fest vorgeschrieben, insbesondere dann, wenn die Zeitintervalle für alle Basisstationen gleich ist. Alternativ kann das Zeitintervall aber auch für jede Basisstation innerhalb eines Funk-Kommunikationssystems unterschiedlich sein.

Eine andere Möglichkeit ist, dass der erste und zweite Schritt nach variablen Zeitintervallen wiederholt wird. Frei bestimmbare Zeitintervalle ermöglichen es, die Zuordnung abhängig von der Last des Funksystems und den sich variabel ändernden Funkbedingungen den Funk-Bedingungen variabel anzupassen. Ändern sich die Funk-Bedingungen zeitlich schnell, so kann das Zeitintervall dementsprechend kurz gewählt werden. Die Zuordnung der Funkressourcen wird somit flexibel den Funk-Bedingungen anzupassen.

Eine weitere Möglichkeit ist, dass der erste und zweite Schritt kontinuierlich wiederholt werden. Dadurch werden die Funkressourcen immer aktuell den augenblicklichen Funk-Bedingungen angepasst. Kontinuierlich bedeutet in diesem Zusammenhang, dass nach Abschluss des zweiten Schrittes unmittelbar wieder mit dem ersten Schritt fortgefahren wird.

In Weiterbildung der Erfindung tauscht jede Teilnehmerstation die erste und gegebenenfalls die zweite Funkressource der mindestens zwei Funkressourcen des zweiten Vielfachzugriffsverfahrens mit jeder anderen der Basisstation zugeordneten Teilnehmerstationen, die anderen Unterbändern zugewiesen sind. Dadurch ist es möglich, alle Kombinationen der Zuordnung der Funkressourcen zu untersuchen, ob sie zu einer Verbesserung der Kapazität führen.

Mit Vorteil ist der Tausch/Wechsel der ersten und zweiten Funkressource erst nach einer bestimmten Schutzzeit umkehrbar. Durch die Schutzzeit wird vermieden, dass ein Ping-Pong Effekt beim Tausch der Funkressourcen auftritt. Liegen zwei Funkressourcen bezüglich der Kapazität nahe zusammen, so ist es möglich, dass kleine Fluktuationen innerhalb der Funkressource zum Hin- und Hertausch der Ressource führen. Dies wird durch die Schutzzeit, die den wechselseitigen Hin- und Hertausch unterbricht, vermieden.

In Ausgestaltung der Erfindung ist das erste Vielfachzugriffsverfahren einFrequenzbereichs-Vielfachzugriffsverfahren (FDMA, Frequency Division Multiplex Access) und/oder das zweite Vielfachzugriffsverfahren ein Vielträger-Codebereichs-Vielfachzugriffsverfahren (MC-CDMA, Multi-Carrier Code Division Multiplex Access). Das beschriebene Verfahren zur Zuordnung der Funkressourcen ist besonders effektiv bei einem Funk-Kommunikationssystem mit einem MC-CDMA Verfahren in Kombination mit einem FDMA Verfahren. In diesem Fall kann die Kapazität sigifikant verbessert werden.

Im Hinblick auf das Funk-Kommunikationssystem wird die oben genannte Aufgabe durch ein Funk-Kommunikationssystem mit den Merkmalen nach Anspruch 13 gelöst.

### Erfindungsgemäß umfasst das Funk-Kommunikationssystem

- Mittel zum Tausch einer ersten Funkressource der mindestens zwei Funkressourcen des zweiten Vielfachzugriffsverfahrens zwischen zwei der mindestens zwei Teilnehmerstationen, die anderen Unterbändern zugewiesen sind, und/oder Mittel zum Wechsel im Hinblick auf die erste Funkressource mindestens einer der mindestens zwei Teilnehmerstationen auf ein nicht mit einer Teilnehmerstation belegtes anderes Unterband,
- Mittel für die Berechnung der Funkkapazität des Funk-Kommunikationssystems für jede neue durch Tausch erzeugte Zuordnung von Funkressourcen und
- Mittel zur Auswahl derjenigen neuen Zuordnung der Funkressource mit der höchsten Funkkapazität.

Das Funk-Kommunikationssystem eignet sich insbesondere zur Durchführung des oben beschriebenen Verfahrens.

Für die Erfindung sind in einem Funk-Kommunikationssystem insbesondere die Komponenten Basisstationen von Bedeutung.

Dabei umfasst jede Basisstation mindestens
- Mittel zum Tausch einer ersten Funkressource der mindestens zwei Funkressourcen des zweiten Vielfachzugriffsverfahrens zwischen zwei der mindestens zwei Teilnehmerstationen, die anderen Unterbändern zugewiesen sind, und/oder Mittel zum Wechsel im Hinblick auf die erste Funkressource mindestens einer der mindestens zwei Teilnehmerstationen auf ein nicht mit einer Teilnehmerstation belegtes anderes Unterband,
- Mittel für die Berechnung der Funkkapazität des Funk-Kommunikationssystems für jede neue durch Tausch erzeugte Zuordnung von Funkressourcen und
- Mittel zur Auswahl derjenigen neuen Zuordnung der Funkressource mit der höchsten Funkkapazität.

Die Basisstationen eignen sich insbesondere zur Durchführung des oben beschriebenen Verfahrens.

Einzelheiten und Details der Erfindung werden nachfolgend anhand von Zeichnungen und darin dargestellten Ausführungsbeispiele näher erläutert.

Hierbei zeigen:
- Fig. 1:: den ersten Schritt für die Zuordnung der Funkressourcen gemäß der Erfindung im Fall eines Funk-Kommunikationssystems mit MC-CDMA und FDMA Komponente,
- Fig. 2:: den zweiten Schritt für die Zuordnung der Funkressourcen gemäß der Erfindung im Fall eines Funk-Kommunikationssystems mit MC-CDMA und FDMA Komponente.

In Funk-Kommunikationssystemen mit Vielträger-Codebereichs - Vielfachzugriffsverfahren (MC-CDMA) senden alle Teilnehmerstationen auf der gesamten System-Bandbreite, wobei die einzelnen Teilnehmerstationen durch orthogonale Spreizcode separiert sind und die Chips eines Spreizcodes jeweils zeitlich parallel auf die OFDM Unterträger projeziert werden. Durch die Einführung eines zusätzlichen Frequenzbereichs-Vielfachzugriffsverfahren (FDMA), die als sogenannte Q-Modifikation bezeichnet wird, wird die gesamte System-Bandbreite in Q Unterbänder unterteilt, wobei in jedem Unterband K Teilnehmer (K entspricht der Länge des Spreizcodes, d.h. der Anzahl der Chips) simultan OFDM Symbole übermitteln können.

Im Folgenden soll das erfindungsgemäße Verfahren beispielsweise für ein Funk-Kommunikationssystem mit MC-CDMA Vielfachzugriffsverfahren mit FDMA Kompnente näher beschrieben werden. Entsprechend der Erfindung ist das erstes Vielfachzugriffsverfahren die FDMA Komponente, die die Funkressource Frequenz in mindestens zwei Unterbänder separiert. Bei dem zweiten Vielfachzugriffsverfahren handelt es sich um das MC-CDMA Vielfachzugriffsverfahren, anhand dessen in jedem Unterband eine Teilnehmerseparierung in zwei Funkressourcen, nämlich Leistung und Frequenz, erfolgt.

In dem hier beschriebenen und in den Figuren gezeigten Beispiel wird von vier Teilnehmerstationen ausgegangen, die anhand der zwei Vielfachzugriffsverfahren, FDMA und MC-CDMA, zwei Unterbändern SB1 und SB2 für Funkübertragungen zugeordnet werden.

Die dem Funk-Kommunikationssystem mit FDMA und MC-CDMA Vielfachzugriffsverfahren inhärenten Freiheitsgrade, wie Unterbänder, Spreizcodes und Unterträger ermöglichen eine höhere Flexibilität bei der Zuordnung der Funkressourcen an die Teilnehmerstationen.

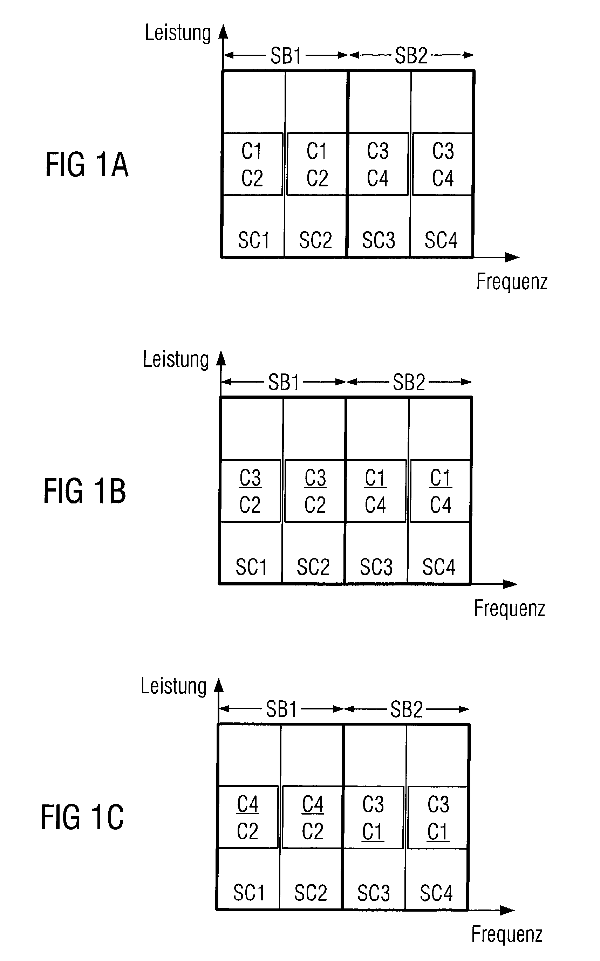

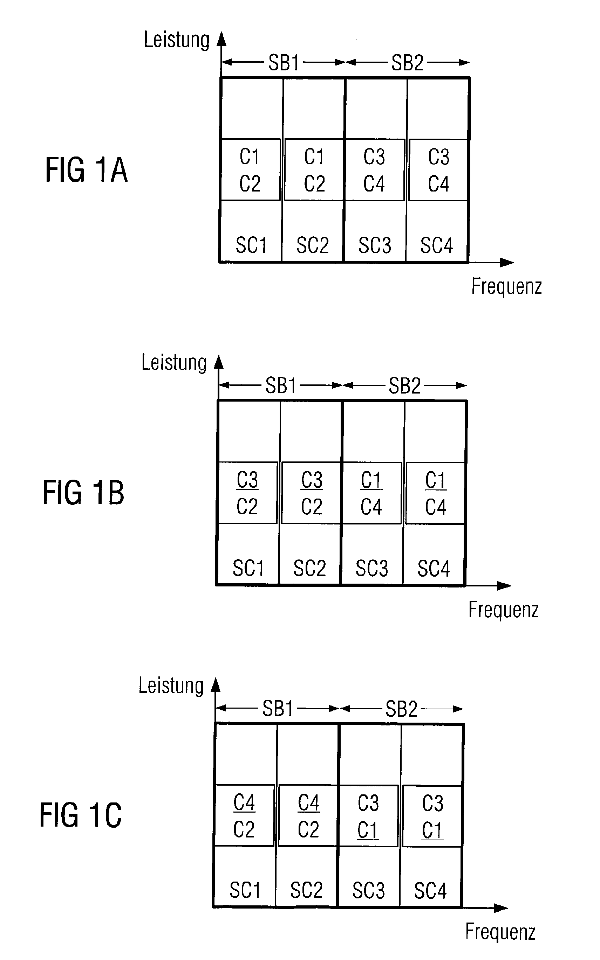

In Fig. 1a ist beispielhaft die Zuordnung der Funkressourcen in einem MC-CDMA Funk-Kommunikationssystem mit FDMA Komponente mit vier Teilnehmerstationen und zwei Unterbändern SB1 und SB2 dargestellt. Dem Subband SB1 sind zwei Teilnehmerstation zugeteilt, wobei die Teilnehmerseparation in Unterband SB1 durch das MC-CDMA Vielfachzugriffsverfahren zum einen die Funkressource Leistung durch die Spreizcode C1 und C2 zwischen den Teilnehmerstationen aufteilt und zum anderen zusätzlich durch die OFDM Komponente des MC-CDMA Vielfachzugriffverfahrens die Funkressource Frequenz in zwei Unterträger SC1 und SC2 aufgeteilt. In einem zweiten Unterband SB2 befinden sich zwei weitere Teilnehmerstationen, wobei die Leistung in dem Unterband SB2 anhand der Spreizcodes C3 und C4 separiert wird. Zusätzlich ist in Fig. 1a dargestellt, dass das Subband SB2 entsprechend der OFDM-Komponente des MC-CDMA Vielfachzugriffsverfahrens in zwei Unterträger SC3 und SC4 aufgeteilt ist.

Durch das erfindungsgemäße Verfahren werden die Funkressourcen des MC-CDMA Funkkommunikationssystems mit FDMA-Komponente bezüglich der Gesamtkapazität des Funkkommunikationssystems optimal den Teilnehmerstationen zugeordnet.

Erfindungsgemäß tauscht jede Teilnehmerstation eine erste Funkressource der mindestens zwei Funkressourcen des zweiten Vielfachzugriffsverfahrens mit anderen der Basisstation zugeordneten Teilnehmerstationen, die anderen Unterbändern zugewiesen sind.

Dies ist beispielhaft in Fig. 1b und Fig. 1c dargestellt. In Fig. 1b tauscht die Teilnehmerstation, die durch die mit dem Spreizcode C1 codierten Leistung in dem Unterband SB1 (erste Funkressource) charakterisiert ist, mit der Teilnehmerstation, die durch die mit dem Spreizcode C3 codierten Leistung in dem Unterband SB2 charakterisiert ist, die Funkressource Leistung zwischen den Unterbändern SB1 und SB2. Für diese neue durch Tausch erzeugte Zuordnung von Funkressourcen wird die Funkkapazität des Funk-Kommunikationssystems berechnet und überprüft, um festzustellen, ob die neue Zuordnung eine höhere Kapazität ermöglicht als die vorherige Zuordnung der Funkressourcen.

Fig. 1b zeigt eine weitere Möglichkeit für den Tausch der Funkressourcen. Die Teilnehmerstation, die durch die mit dem Spreizcode C1 codierten Leistung in dem Unterband SB1 (erste Funkressource) charakterisiert ist, tauscht mit der Teilnehmerstation, die durch die mit dem Spreizcode C4 codierten Leistung in dem Unterband SB2 charakterisiert ist, die Funkressource Leistung zwischen den Unterbändern SB1 und SB2. Auch für diese Zuordnung wird die Kapazität des Funkkommunikation berechnet und mit den anderen möglichen Zuordnungen verglichen, ob eine höhere Funkkapazität erreicht wird. Fig. 1b und 1c zeigen nur die Vertauschung der ersten Funkressource der Teilnehmerstation, die durch den Spreizcode C1 charakterisiert ist. Die möglichen Aufteilungen der Funkressourcen für andere Teilnehmerstationen und korrespondierende Spreizcodes sind nicht dargestellt.

Nachdem alle möglichen Zuordnungen überprüft wurden, wird diejenige neue Zuordnung der Funkressource mit der höchsten Funkkapazität ausgewählt. In unserem Beispiel soll dies die Zuordnung der Funkressourcen entsprechend Fig. 1c sein.

In einem zweiten Schritt zur Zuordnung der Funkressourcen wird die zweite Funkressource des zweiten Vielfachzugriffsverfahrens mit anderen der Basisstation zugeordneten Teilnehmerstationen, die anderen Unterbändern zugewiesen sind, getauscht. Dieses erfindungsgemäße Verfahren bedeutet für das MC-CDMA Vielfachzugriffsverfahren mit FDMA Komponente, dass jeder Unterträger eines Unterbandes wird mit allen Unterträgern aller übrigen Unterbänder sukzessive vertauscht.

Dies ist schematisch in Fig. 2 dargestellt. Fig. 2a zeigt die Zuordnung der Funkressourcen mit maximaler Funkkapazität nachdem die Zuordnung der Funkressourcen des ersten Schritts abgeschlossen wurde. In Fig. 2b werden die Unterträger des Unterbandes SB1, die zweite Funkressource des MC-CDMA Vielfachzugriffsverfahrens - in diesem Fall SC1 mit dem Unterträger SC3 des Subbandes SB2 vertauscht. Fig. 2c zeigt den Tausch des Unterträgers SC1 des Subbandes SB1 mit dem Subträger SC4 des Unterbandes SB2. Für alle Zuordnungen der Unterträger zu den unterschiedlichen Unterbändern wird die Funkkapazität des Funk-Kommunikationssystems bestimmt und diejenige Zuordnung ausgewählt, die die höchste Kapazität gewährleistet.

Die Schritte 1 und 2 können solange wiederholt werden bis keine Verbesserung der Funkkapazität beobachtbar ist. Alternativ kann die Iteration der Schritte 1 und 2 auch abgebrochen werden, wenn die Funkkapazität einen vorab festgelegten Schwellwert für die Funkkapazität überschreitet.

Würde man für die Zuordnung der Funkressourcen alle Kombinationen testen, so würde Aufwand, insbesondere die damit verbunden Rechnenaufwand, exponentiell mit der Anzahl der Unterträger steigen. Durch das erfindungsgemäße Verfahren, dass die Vertauschen einschränkt, ist der Aufwand nur von der Wurzel der Anzahl der Unterträger abhängig. Dies zeigt, dass das erfindungsgemäße Verfahren sehr effizient bei der Zuordnung der Funkressourcen eingesetzt werden kann.

## Patentansprüche

1. Verfahren zur dynamischen Zuordnung von Funkressourcen an mindestens zwei einer Basisstation zugeordneten Teilnehmerstationen in einem Funk-Kommunikationssystem, wobei durch ein erstes Vielfachzugriffsverfahren die Funkressourcen in mindestens einer Funkressource aus Leistung, Zeit, Raum oder insbesondere Frequenz in mindestens zwei Unterbänder (SB1, SB2) separiert werden und durch ein zweites Vielfachzugriffsverfahren in jedem Unterband (SB1, SB2) eine Teilnehmerseparierung in mindestens zwei Funkressourcen aus Leistung, Frequenz, Zeit oder Raum erfolgt, wobei die mindestens zwei Teilnehmerstationen anhand der zwei Vielfachzugriffsverfahren den mindestens zwei Unterbändern (SB1, SB2) für Funkübertragungen zugeordnet werden,
**dadurch gekennzeichnet,**
**dass** zwei der mindestens zwei Teilnehmerstationen, die anderen Unterbändern zugewiesen sind, eine erste Funkressource (C1, C2, C3, C4) der mindestens zwei Funkressourcen des zweiten Vielfachzugriffsverfahrens tauschen und/oder mindestens eine der mindestens zwei Teilnehmerstationen auf ein nicht mit einer Teilnehmerstation belegtes anderes Unterband im Hinblick auf die erste Funkressource (C1, C2, C3, C4) wechselt,
**dass** für jede neu erzeugte Zuordnung von Funkressourcen eine Funkkapazität des Funk-Kommunikationssystems berechnet wird und
**dass** diejenige neue Zuordnung der Funkressource mit der höchsten Funkkapazität ausgewählt wird.

2. Verfahren nach Anspruch 1, **dadurch gekennzeichnet, dass** nach der Zuordnung der Funkressource anhand der ersten Funkressource (C1, C2, C3, C4) der mindestens zwei Funkressourcen des zweiten Vielfachzugriffsverfahrens in einem ersten Schritt
zwei der mindestens zwei Teilnehmerstationen, die anderen Unterbändern zugewiesen sind, in einem zweiten Schritt eine zweite Funkressource (SC1, SC2, SC3, SC4) der mindestens zwei Funkressourcen des zweiten Vielfachzugriffsverfahrens tauschen und/oder mindestens eine der mindestens zwei Teilnehmerstationen auf ein nicht mit einer Teilnehmerstation belegtes anderes Unterband im Hinblick auf die zweite Funkressource (SC1, SC2, SC3, SC4) wechselt,
dass für jede neu erzeugte Zuordnung von Funkressourcen eine Funkkapazität des Funk-Kommunikationssystems berechnet wird und
dass diejenige neue Zuordnung der Funkressource mit der höchsten Funkkapazität ausgewählt wird.

3. Verfahren nach Anspruch 2, **dadurch gekennzeichnet, dass** der erste und zweite Schritt wiederholt werden, bis die Änderung der Funkkapazität unter einem Schwellwert liegt.

4. Verfahren nach einem der Ansprüche 1 bis 3, **dadurch gekennzeichnet, dass** die erste Zuordnung der Funkressourcen zufällig erfolgt.

5. Verfahren nach einem der Ansprüche 1 bis 3, **dadurch gekennzeichnet, dass** die erste Zuordnung der Funkressourcen vorgegeben wird.

6. Verfahren nach einem der Ansprüche 1 bis 5, **dadurch gekennzeichnet, dass** der erste und zweite Schritt nach vorbestimmten äquidistanten Zeitintervallen wiederholt werden.

7. Verfahren nach einem der Ansprüche 1 bis 5, **dadurch gekennzeichnet, dass** der erste und zweite Schritt nach variablen Zeitintervallen wiederholt werden.

8. Verfahren nach einem der Ansprüche 1 bis 5, **dadurch gekennzeichnet, dass** der erste und zweite Schritt kontinuierlich wiederholt werden.

9. Verfahren nach einem der Ansprüche 1 bis 8, **dadurch gekennzeichnet, dass** jede Teilnehmerstation die erste und gegebenenfalls die zweite Funkressource der mindestens zwei Funkressourcen des zweiten Vielfachzugriffsverfahrens mit jeder anderen der Basisstation zugeordneten Teilnehmerstationen, die anderen Unterbändern zugewiesen sind, tauscht.

10. Verfahren nach einem der Ansprüche 1 bis 9, **dadurch gekennzeichnet, dass** der Tausch/Wechsel der ersten und zweiten Funkressource erst nach einer bestimmten Schutzzeit umkehrbar ist.

11. Verfahren nach einem der Ansprüch 1 bis 10, **dadurch gekennzeichnet, dass** das das erste Vielfachzugriffsverfahren ein Frequenzbereichs Vielfachzugriffsverfahren ist.

12. Verfahren nach einem der Ansprüch 1 bis 11, **dadurch gekennzeichnet, dass** das das zweite Vielfachzugriffsverfahren ein Vielträger Codebereichs-Vielfachzugriffsverfahren ist.

13. Funk-Kommunikationssystem mit mindestens zwei einer Basisstation zugeordneten Teilnehmerstationen, insbesondere zur Durchführung eines Verfahrens nach einem der vorangegangen Ansprüche, umfassend:
- Mittel zum Tausch einer ersten Funkressource (C1, C2, C3, C4) der mindestens zwei Funkressourcen des zweiten Vielfachzugriffsverfahrens zwischen zwei der mindestens zwei Teilnehmerstationen, die anderen Unterbändern zugewiesen sind, und/oder Mittel zum Wechsel im Hinblick auf die erste Funkressource (C1, C2, C3, C4) mindestens einer der mindestens zwei Teilnehmerstationen auf ein nicht mit einer Teilnehmerstation belegtes anderes Unterband,
- Mittel für die Berechnung der Funkkapazität des Funk-Kommunikationssystems für jede neue durch Tausch erzeugte Zuordnung von Funkressourcen und
- Mittel zur Auswahl derjenigen neuen Zuordnung der Funkressource mit der höchsten Funkkapazität.

14. Basisstaion in einem Funk-Kommunikationssystem nach Anspruch 13 umfassend:
- Mittel zum Tausch einer ersten Funkressource (C1, C2, C3, C4) der mindestens zwei Funkressourcen des zweiten Vielfachzugriffsverfahrens zwischen zwei der mindestens zwei Teilnehmerstationen, die anderen Unterbändern zugewiesen sind, und/oder Mittel zum Wechsel im Hinblick auf die erste Funkressource (C1, C2, C3, C4) mindestens einer der mindestens zwei Teilnehmerstationen auf ein nicht mit einer Teilnehmerstation belegtes anderes Unterband,
- Mittel für die Berechnung der Funkkapazität des Funk-Kommunikationssystems für jede neue durch Tausch erzeugte Zuordnung von Funkressourcen und
- Mittel zur Auswahl derjenigen neuen Zuordnung der Funkressource mit der höchsten Funkkapazität.
